# FASCICULE DE BREVET EUROPEEN

(11) **EP 3 053 247 B1**
(45) Date de publication et mention de la délivrance du brevet: **29.04.2020**
(21) Numéro de dépôt: 14790200.1
(22) Date de dépôt: 24.09.2014
(51) Int. Cl.: B60L 53/14, H02J 7/14, H02M 1/36

(54) **SYSTÈME ET PROCÉDÉ DE CHARGE D'UNE BATTERIE DE TRACTION LIMITANT L'APPEL DE COURANT DE CAPACITÉS PARASITES**
SYSTEM UND VERFAHREN ZUM LADEN EINER TRAKTIONSBATTERIE MIT BEGRENZUNG DER STROMAUFNAHME PARASITÄRER KAPAZITÄTEN
SYSTEM AND METHOD FOR CHARGING A TRACTION BATTERY LIMITING THE CURRENT DRAW OF PARASITIC CAPACITANCES

(30) Priorité: 01.10.2013 FR 1359483
(43) Date de publication de la demande: 10.08.2016
(73) Titulaire: Renault S.A.S., 92100 Boulogne-Billancourt (FR)
(72) Inventeur: RIPOLL, Christophe, F-78460 Chevreuse (FR); GATI, Mehdi, F-92330 Sceaux (FR); REYSS, Olivier, F-92120 Montrouge (FR)
(86) Numéro de dépôt international: PCT/FR2014/052379
(87) Numéro de publication internationale: WO 2015/049436

(56) Documents cités:
- US-A1- 2005 231 172
- US-A1- 2005 231 172
- US-A1- 2013 176 650
- US-A1- 2013 176 650
- US-A1- 2013 193 910
- US-A1- 2013 193 910
- US-A1- 2013 201 582
- US-A1- 2013 201 582

## Description

La présente invention se rapporte de manière générale aux domaines de l'électrotechnique et de l'automobile. Plus précisément l'invention concerne un système de charge pour batterie de traction d'un véhicule électrique ou hybride.

Les systèmes de charge pour ces types de véhicule comportent chacun un ou plusieurs convertisseurs de courant permettant d'adapter le courant fourni par le réseau d'alimentation auquel est branché le véhicule correspondant, en un courant permettant de charger une batterie de traction du véhicule. Des courants de fuite, engendrés lors de cette conversion du courant, transitent par des capacités parasites dites de mode commun, reliant chacun des éléments du système de charge au châssis du véhicule, puis par la terre à laquelle est relié le véhicule via une prise de terre. Selon leurs amplitudes et leurs fréquences, ils sont susceptibles de provoquer le déclenchement de disjoncteurs de protection et donc d'interdire ou d'arrêter une recharge de la batterie du véhicule.

Afin de limiter ces courants de fuite, une première possibilité est d'isoler le système de charge du réseau via un transformateur galvanique. Cependant un tel transformateur est encombrant et coûteux, d'autant plus que la puissance de charge de la batterie de traction est importante, ce qui pénalise le développement de véhicules électriques à bas coût ayant une autonomie satisfaisante.

Le brevet FR2964506 propose, pour limiter ces courants de fuite, un système de charge d'un véhicule comportant une capacité de limitation de courants de fuite connectée entre une phase de neutre d'un réseau d'alimentation auquel on branche le véhicule, et le châssis du véhicule, celui-ci étant relié à la terre. Ainsi une partie des courants de fuite générés pendant le fonctionnement du système de charge seront détournés vers le neutre du réseau d'alimentation.

Cette solution, applicable aux chargeurs intégrés pour véhicules électriques ou hybrides, non isolés du réseau d'alimentation par un transformateur galvanique, présente cependant un inconvénient : lors du positionnement initial des interrupteurs de puissance d'un tel chargeur, les composants capacitifs se trouvant sur les potentiels haute tension du chargeur, ainsi que les composants de filtrage tels que la capacité de limitation de courants de fuite, sont susceptibles d'interagir avec le réseau d'alimentation.

En effet ces composants capacitifs provoquent, pendant une phase transitoire, un appel de courant leur permettant de se charger à une tension proche de celle du réseau d'alimentation. Pendant ce transitoire, une boucle de courant circule en entrée du chargeur, qu'on peut modéliser par un circuit comportant la terre, le réseau d'alimentation, une inductance équivalente de mode commun d'entrée du chargeur, et une capacité équivalente de mode commun d'entrée du chargeur, elle-même reliée à la terre. Dans cette boucle d'entrée le courant résonne à une fréquence de l'ordre de quelques kHz (kilo Hertz). Le courant de mode commun ainsi créé circule sur le réseau d'alimentation et est susceptible de faire réagir les appareils de protection amont tels qu'un disjoncteur différentiel ou un disjoncteur classique, ainsi que de générer des tensions transitoires d'alimentation susceptibles de réagir avec le reste de l'installation électrique (appareils domestiques).

La capacité de limitation de courants de fuite contribuant beaucoup à la capacité équivalente de mode commun d'entrée du chargeur, pour remédier à cet inconvénient on connecte par exemple une capacité et une résistance d'amortissement en parallèle à la capacité de limitation de courants de fuite, afin de diminuer l'amplitude de ces oscillations transitoires. Cependant ce remède n'est pas toujours suffisant. Le document US2005/231172 divulgue lui un système de précharge des capacités d'un convertisseur utilisant une temporisation avant la connection d'un banc de capacité de filtrage.

Il est à noter que le terme « haute tension » fait référence ici à l'ordre de tension du réseau électrique alimenté par la batterie de traction dont la tension avoisine 400V (volts) lorsqu'elle est complètement chargée, par opposition au réseau de bord du véhicule alimenté par la batterie de servitude dont la tension est de l'ordre de 14V.

Un des buts de l'invention est de remédier à au moins une partie des inconvénients de la technique antérieure en fournissant un procédé de charge et un système de charge pour batterie de traction d'un véhicule électrique ou hybride, permettant de limiter le courant d'appel des composants capacitifs du système de charge en début de charge.

A cette fin, l'invention propose un système de charge pour batterie de traction d'un véhicule à traction au moins partiellement électrique, comportant un étage de filtrage d'entrée destiné à être connecté à un réseau d'alimentation, ledit étage de filtrage comportant une capacité de limitation de courants de fuite apte à être connectée, par un interrupteur de l'étage de filtrage, entre d'une part au moins une connexion de phase d'alimentation ou une connexion de neutre dudit système de charge, et d'autre part une masse dudit système de charge, ledit système de charge étant caractérisé en ce qu'il comporte en outre:
- des moyens de commande, aptes à charger des capacités parasites dudit système de charge, sans transfert d'énergie dudit réseau d'alimentation vers ladite batterie de traction, alors que ledit réseau d'alimentation est connecté audit système de charge,
- des moyens de temporisation, activés par lesdits moyens de commande, et aptes à fermer ledit interrupteur de l'étage de filtrage à l'expiration d'un délai de temporisation supérieur ou égal à un délai prédéterminé,
- et des moyens d'activation de charge aptes à transférer de l'énergie entre ledit réseau d'alimentation et ladite batterie de traction, ledit interrupteur de l'étage de filtrage étant fermé.

Grâce à l'invention, la capacité de limitation de courants de fuite n'est pas connectée tout de suite à l'alimentation réseau, permettant les autres composants capacitifs de se charger avec un courant d'appel moins important que lorsque la capacité de limitation de courants de fuite est connectée à l'alimentation réseau. Après la charge de ces autres composants capacitifs, le courant d'appel lors de l'activation du transfert de charge est moins important, diminuant ainsi l'intensité du courant transitoire d'oscillation dans une boucle de courant située en entrée du système de charge. Ainsi les appareils de protection amont du réseau d'alimentation permettent la charge de la batterie de traction du véhicule même lorsque celui-ci est soumis à des phénomènes transitoires en début de charge dus aux composants capacitifs de son système de charge.

L'invention est utilisable dans un système de charge utilisant un réseau d'alimentation monophasé ou polyphasé. Il est à noter que la capacité de limitation de courants de fuite du chargeur selon l'invention est connectée à une phase du réseau d'alimentation, ou au neutre du réseau d'alimentation, ce neutre pouvant être reconstitué comme décrit dans le document FR2964506.

Selon une caractéristique avantageuse du système de charge selon l'invention, lesdits moyens d'activation sont aptes à temporiser un transfert d'énergie entre ledit réseau d'alimentation et ladite batterie de traction jusqu'à un instant pour lequel l'amplitude d'une tension d'une phase d'alimentation dudit réseau d'alimentation devient très faible par rapport à son amplitude maximale.

Ainsi lors du début de charge de la batterie de traction, on diminue le risque que le courant transitoire de la boucle d'entrée s'additionnant à d'autres courants de fuite liés au fonctionnement d'un convertisseur du système de charge, ne fasse apparaître un pic de courant de mode commun susceptible de faire réagir un disjoncteur.

Selon une autre caractéristique avantageuse du système de charge selon l'invention, ledit délai de temporisation expire à un instant pour lequel l'amplitude d'une tension d'une phase d'alimentation dudit réseau d'alimentation devient très faible par rapport à son amplitude maximale, lesdits moyens d'activation débutant le transfert d'énergie entre ledit réseau d'alimentation et ladite batterie dès la fermeture dudit interrupteur de l'étage de filtrage.

De même la connexion de la capacité de limitation de courants de fuite au réseau d'alimentation à un moment où l'amplitude de tension d'alimentation est faible permet de diminuer les amplitudes de courant à quelques kHz du régime transitoire d'oscillation de la boucle d'entrée et donc de limiter les risques de déclenchement d'un disjoncteur. L'activation du transfert d'énergie du réseau d'alimentation vers la batterie de traction au même moment que cette connexion permet de raccourcir le temps d'initialisation du système de charge.

Selon une autre caractéristique avantageuse du système de charge selon l'invention, une capacité d'amortissement et une résistance d'amortissement sont également connectés, par ledit interrupteur de l'étage de filtrage, entre d'une part ladite au moins une connexion de phase d'alimentation ou ladite connexion de neutre dudit système de charge, et d'autre part ladite masse dudit système de charge.

Cette capacité d'amortissement et cette résistance d'amortissement permettent encore de diminuer l'amplitude des oscillations de la boucle d'entrée pendant le régime transitoire.

Avantageusement, lorsque le système de charge selon l'invention comporte un étage redresseur apte à être connecté au réseau d'alimentation par l'intermédiaire de l'étage de filtrage d'entrée, et un étage élévateur de tension connecté entre ledit étage redresseur et ladite batterie de traction, lesdits étages redresseur et élévateur de tension comportant des interrupteurs, lesdits moyens de commande sont aptes à faire commuter les interrupteurs de l'étage redresseur par une commande en modulation de largeur d'impulsion, les interrupteurs de l'étage élévateur de tension restant ouverts, pendant ledit délai de temporisation.

Ainsi la charge des composantes capacitives du système de charge avant le transfert d'énergie entre le réseau d'alimentation et la batterie de traction est effectuée sans ajout de composants supplémentaires au système de charge.

Alternativement, lorsque le système de charge selon l'invention comporte un étage redresseur apte à être connecté au réseau d'alimentation par l'intermédiaire de l'étage de filtrage d'entrée, et un étage élévateur de tension connecté entre ledit étage redresseur et ladite batterie de traction, lesdits étages redresseur et élévateur de tension comportant des interrupteurs initialement ouverts, et lorsque le réseau d'alimentation est monophasé, lesdits moyens de commande sont aptes à commander la fermeture des interrupteurs bas dudit étage redresseur à un instant pour lequel l'amplitude de tension de la phase d'alimentation du réseau monophasé devient très faible par rapport à son amplitude maximale, avant l'activation desdits moyens de temporisation.

Cette alternative de réalisation permet également de ne pas ajouter de composants supplémentaires au système de charge pour réaliser l'invention. De plus elle permet de limiter encore l'appel de courant des composantes capacitives du système de charge avant la fermeture de l'interrupteur de l'étage de filtrage. Cette alternative de réalisation est transposable au cas triphasé bien que légèrement plus complexe à mettre en œuvre dans ce cas-ci.

Avantageusement dans cette alternative de réalisation utilisant un réseau d'alimentation monophasé, lesdits moyens de commande sont aptes à accompagner ladite fermeture des interrupteurs bas dudit étage redresseur de la fermeture d'un interrupteur haut dudit étage redresseur assurant un fonctionnement dudit système de charge en phase de roue libre avant l'activation d'un transfert d'énergie entre ledit réseau d'alimentation et ladite batterie de traction.

Cette implémentation permet au système de charge de transférer de l'énergie du réseau d'alimentation vers la batterie dès la fermeture de l'interrupteur de l'étage de filtrage, sans auparavant reconfigurer les interrupteurs de l'étage redresseur.

L'invention concerne aussi un procédé de charge d'une batterie de traction d'un véhicule à traction au moins partiellement électrique, un système de charge dudit véhicule ayant été préalablement connecté à un réseau d'alimentation électrique comportant au moins une phase d'alimentation et un neutre,
ledit procédé étant caractérisé en ce qu'il comporte :
- une étape de commande dudit système de charge, apte à charger des capacités parasites dudit système de charge sans transfert d'énergie dudit réseau d'alimentation vers ladite batterie de traction,
- une étape de connexion d'une capacité de limitation de courants de fuite entre d'une part une connexion à ladite au moins une phase d'alimentation ou audit neutre et d'autre part une masse dudit système de charge, ladite étape de connexion ayant lieu à l'expiration d'un délai supérieur ou égal à un délai prédéterminé,
- et une étape de transfert d'énergie entre ledit réseau d'alimentation et ladite batterie de traction, après l'étape de connexion de ladite capacité de limitation de courants de fuite.

Préférentiellement, ladite étape de transfert d'énergie débute à un instant pour lequel l'amplitude de tension de ladite au moins une phase d'alimentation devient très faible par rapport à son amplitude maximale.

Avantageusement, ladite étape de transfert d'énergie suit immédiatement l'étape de connexion de la capacité de limitation de courants de fuite.

Lorsque le système de charge selon l'invention comporte un étage redresseur connecté au réseau d'alimentation, et un étage élévateur de tension connecté entre ledit étage redresseur et ladite batterie de traction, lesdits étages redresseur et élévateur de tension comportant des interrupteurs, l'étape de commande comporte par exemple une étape de fermeture des interrupteurs de l'étage redresseur, utilisant une commande en modulation de largeur d'impulsion, les interrupteurs de l'étage élévateur de tension restant en position ouverte pendant cette étape de commande.

Alternativement, lorsque le système de charge selon l'invention comporte un étage redresseur connecté au réseau d'alimentation, celui-ci étant monophasé, et un étage élévateur de tension connecté entre ledit étage redresseur et ladite batterie de traction, lesdits étages redresseur et élévateur de tension comportant des interrupteurs, l'étape de commande comporte une étape de fermeture des interrupteurs bas de l'étage redresseur à un instant pour lequel l'amplitude de tension de ladite au moins une phase d'alimentation devient très faible par rapport à son amplitude maximale, les interrupteurs de l'étage élévateur de tension restant en position ouverte pendant cette étape de commande.

Dans cette alternative, la fermeture des interrupteurs bas de l'étage redresseur s'accompagne préférentiellement de la fermeture d'un interrupteur haut dudit étage redresseur, assurant un fonctionnement du système de charge selon l'invention en phase de roue libre avant l'étape de transfert d'énergie entre ledit réseau d'alimentation et ladite batterie de traction.

Le procédé de charge selon l'invention présente des avantages analogues à ceux du système de charge selon l'invention.

D'autres caractéristiques et avantages apparaîtront à la lecture d'un mode de réalisation préféré décrit en référence aux figures dans lesquelles :
- la figure 1 représente un système de charge selon l'invention, dans ce mode de réalisation préféré,
- la figure 2 représente une mesure du courant de prise de terre d'un véhicule électrique ou hybride n'implémentant pas l'invention,
- la figure 3 représente des étapes du procédé de charge selon l'invention, dans ce mode de réalisation préféré,
- et la figure 4 représente l'alimentation d'une commande en modulation de largeur d'impulsion ainsi qu'une mesure du courant de prise de terre d'un véhicule électrique ou hybride implémentant l'invention.

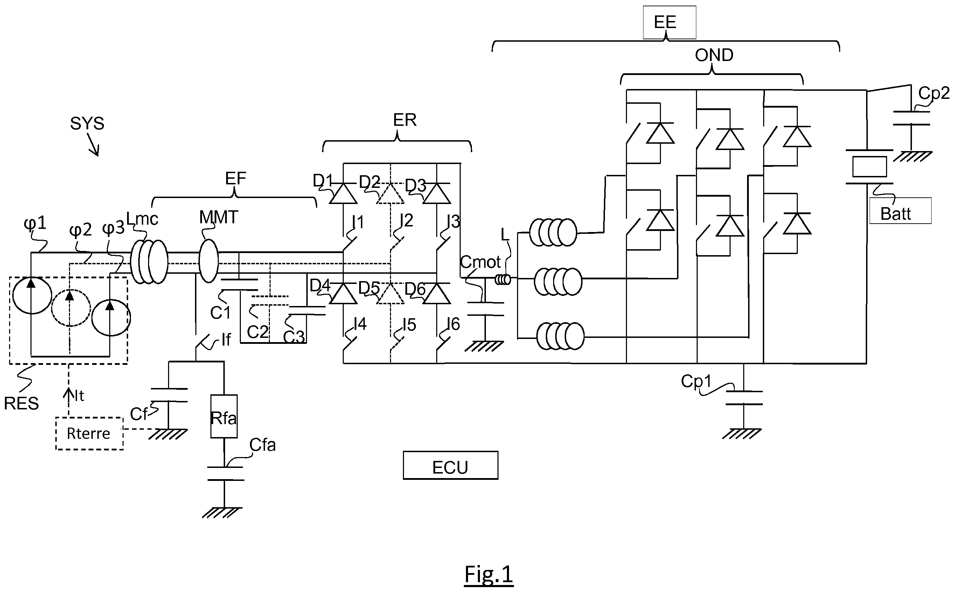

Selon un mode préféré de réalisation de l'invention, un système de charge SYS selon l'invention, représenté à la **figure 1****,** est connecté à un réseau d'alimentation RES. Le système de charge SYS est un système de charge intégré pour batterie de traction d'un véhicule électrique ou hybride.

Dans ce mode préféré de réalisation de l'invention, le système de charge SYS est non isolé du réseau RES par un transformateur galvanique, et utilise la topologie décrite dans la demande de brevet FR2964506. Cependant l'invention est applicable à d'autres types de chargeur, par exemple un chargeur isolé galvaniquement du réseau RES, ou un chargeur à résonance.

Le système de charge SYS permet de recharger la batterie Batt d'un véhicule électrique ou hybride à partir d'un réseau d'alimentation RES triphasé ou monophasé. Le fonctionnement du système de charge SYS lorsque le réseau d'alimentation RES est triphasé est décrit en détails dans le brevet FR2964510. Le fonctionnement du système de charge SYS lorsque le réseau d'alimentation RES est monophasé est décrit en détails dans le brevet FR2974253. Dans cet exemple de réalisation de l'invention, le réseau d'alimentation RES comporte une phase de neutre reliée à la terre. Cependant l'invention n'est pas limité à une utilisation sur ce type de réseau d'alimentation, le système de charge SYS fonctionnement également sur un réseau dans lequel le neutre du réseau n'est pas directement relié à la terre par exemple.

Le système de charge SYS comporte un étage de filtrage d'entrée EF comportant trois capacités C1, C2, C3 comportant chacune une première extrémité et une deuxième extrémité. Les capacités C1, C2, et C3 sont connectées en étoile en leurs premières extrémités et reliées chacune en leurs deuxièmes extrémités à une connexion de phase ϕ1, ϕ2, ou ϕ3 du réseau d'alimentation RES, en entrée de l'étage de filtrage EF. La sortie de l'étage de filtrage d'entrée EF est connectée à un étage redresseur ER.

Lorsque le réseau d'alimentation RES est un réseau triphasé, les trois connexions de phase ϕ1, ϕ2, ou ϕ3 en entrée de l'étage de filtrage d'entrée EF sont chacune connectées à une phase d'alimentation du réseau d'alimentation RES. Lorsque le réseau d'alimentation RES est un réseau monophasé, seules deux connexions de phase ϕ1 et ϕ3 en entrée de l'étage de filtrage d'entrée EF sont connectées au réseau d'alimentation RES, l'une à la phase d'alimentation du réseau monophasé et l'autre à la phase de neutre du réseau monophasé. Dans ce cas aucun courant de circule dans la capacité C2 et un bras de l'étage redresseur ER auquel la capacité C2 est connectée. Cette partie inutilisée du système de charge SYS lorsqu'il est connecté à un réseau monophasé est représentée en pointillés sur la **figure** 1.

L'étage redresseur ER comporte trois bras dont les points milieux sont ses entrées et sont reliés chacun à une capacité C1, C2 ou C3 de l'étage de filtrage EF en leurs deuxièmes extrémités. Chaque bras comporte respectivement, montés en série entre son point milieu et la borne négative de la batterie Batt formant une première sortie de l'étage redresseur ER :
- une diode respective D4, D5 ou D6 dont la cathode est fixée au point milieu du bras et
- un interrupteur « bas » respectif I4, I5 ou I6, relié d'un côté à l'anode de la diode respective D4, D5 ou D6 et de l'autre côté à la borne négative de la batterie Batt. On appelle ici interrupteur « bas » un interrupteur de l'étage redresseur ER connecté à la borne négative de la batterie Batt.
Chaque bras de l'étage redresseur ER comporte également, montés en série entre son point milieu et une deuxième sortie de l'étage redresseur ER, connectée à une première entrée d'un étage élévateur de tension EE :
- une diode respective D1, D2 ou D3 dont la cathode est fixée à la deuxième sortie de sortie de l'étage redresseur ER,
- un interrupteur « haut» respectif I1, I2 ou I3, relié d'un côté à l'anode de la diode respective D1, D2 ou D3 et de l'autre côté au point milieu du bras de l'étage redresseur ER. On appelle ici interrupteur « haut » un interrupteur de l'étage redresseur ER connecté au point milieu d'un bras de l'étage redresseur ER.

Les interrupteurs « bas » et « haut » de l'étage redresseur ER sont des transistors de puissance tels que des IGBT (d'après l'anglais Insulated Gate Bipolar Transistor).

L'étage élévateur de tension EE comporte, montés en série entre sa première entrée et une première sortie de l'étage élévateur de tension EE connectée à la borne positive de la batterie Batt :
- une inductance L
- un moteur de traction comportant trois bobinages statoriques,
- et un étage onduleur OND.

L'inductance L est une inductance de valeur beaucoup plus petite que celle des bobinages statoriques de traction auxquels l'inductance L est reliée par le point neutre du moteur de traction. Chacun de ces bobinages statoriques est également relié, à son extrémité non reliée au point neutre du moteur, à une entrée de l'étage onduleur OND qui est un point milieu d'un bras connecté par l'intermédiaire d'une diode montée en parallèle à un interrupteur de puissance, à la borne positive de la batterie Batt. Chaque point milieu des trois bras de l'étage onduleur OND est également connecté par l'intermédiaire d'une diode montée en parallèle à un interrupteur de puissance, à la borne négative de la batterie Batt, qui forme à la fois la deuxième sortie et la deuxième entrée de l'étage élévateur de puissance EE.

Ce système de charge SYS comporte plusieurs composantes capacitives parasites, telles que :
- une capacité parasite Cp1 située entre la borne négative de la batterie Batt et la masse du système de charge SYS, qui est ici le châssis du véhicule,
- une capacité parasite Cp2 située entre la borne positive de la batterie Batt et la masse du système de charge SYS,
- et une capacité parasite Cmot entre la première entrée de l'étage élévateur de tension EE et la masse du système de charge SYS.

Une prise de terre présente sur le câble de charge du véhicule permet de relier la masse du système de charge SYS à une prise de terre du réseau d'alimentation RES.

Afin de limiter les courants de fuite transitant sur cette prise de terre à travers une résistance de terre Rterre, l'étage de filtrage EF comporte une capacité Cf connectée entre une phase ϕ3 d'alimentation ou de neutre du réseau d'alimentation RES, et la masse du système de charge SYS. Cette capacité Cf, de l'ordre de un microfarad, est appelée dans cette demande « capacité de limitation de courants de fuite ». Cependant il est à noter que dans d'autres implémentations de l'invention, cette capacité de « limitation de courants de fuite » est par exemple composée de plusieurs capacités reliées entre une des phases du réseau RES et la masse du véhicule, jouant un rôle de filtrage prépondérant sur la fonction de limitation des courants de fuite, alors secondaire. Par exemple si les capacités C1, C2 et C3 étaient connectées à la masse du véhicule en leurs premières extrémités, elles pourraient jouer le rôle de capacité de limitation de courants de fuite.

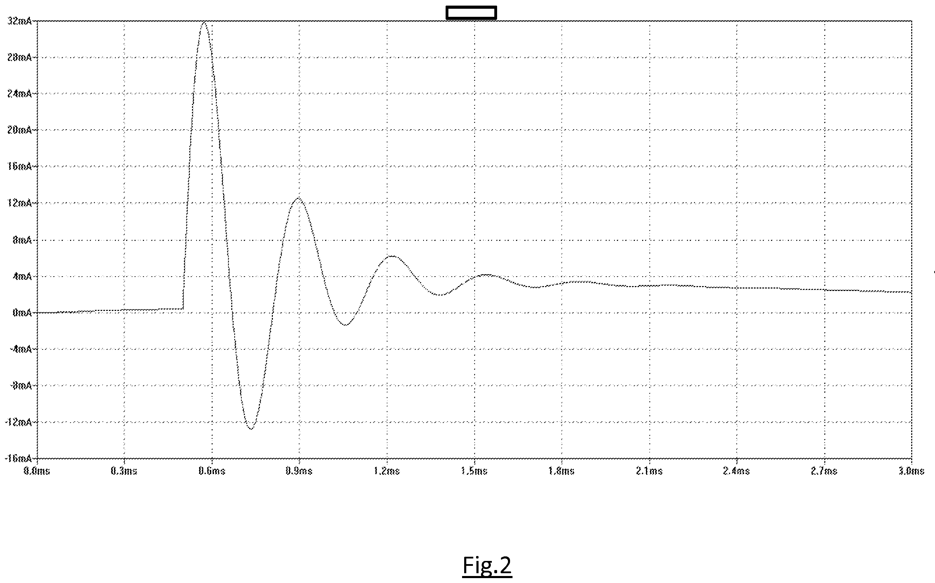

Lors d'un début de recharge de la batterie Batt par le système de charge SYS, les capacités parasites Cp1, Cp2 et Cmot, ainsi que la capacité Cf de limitation de courants de fuite, créent un appel de courant passant par la prise de terre. Ainsi se forme un courant résonant It, représenté à la **figure 2****,** circulant dans une boucle d'entrée comportant la résistance de terre Rterre, le réseau RES, une inductance équivalente de mode commun Lmc et la capacité de limitation de courants de fuite Cf. Sur la **figure 2**, l'axe des abscisses représente le temps en millisecondes tandis que l'axe des ordonnées représente l'amplitude du courant It en milliampères. Ce courant It résonne à une fréquence de quelques kiloHertz et est susceptible de provoquer le déclenchement de disjoncteurs de protection en amont du système de charge SYS, l'inductance équivalente de mode commun Lmc étant de l'ordre de quelques microHenry. Il est à noter que cette inductance Lmc n'existe pas physiquement dans le système de charge SYS mais représente l'inductance équivalente existant en entrée du système de charge SYS.

Afin de limiter ce courant résonant, une capacité d'amortissement Cfa de l'ordre d'un microFarad, montée en série avec une résistance d'amortissement Rfa de l'ordre de 100 Ohms, sont connectés en parallèle aux bornes de la capacité Cf de limitation de courants de fuite. En variante d'autres montages de la capacité d'amortissement Cfa et de la résistance d'amortissement Rfa sont possibles. Par exemple en variante la résistance d'amortissement Rfa est montée en série avec la capacité Cf de limitation de courant de fuite, et la capacité d'amortissement Cfa est montée en parallèle de ce montage série comprenant la résistance d'amortissement Rfa et la capacité Cf de limitation de courant de fuite.

Cependant, ces composants d'amortissement n'étant pas toujours efficaces contre le déclenchement intempestif des protecteurs en amont du système de charge SYS, le système de charge SYS comporte un interrupteur If connecté entre la capacité Cf de limitation de courants de fuite et la phase ϕ3 d'alimentation ou de neutre du réseau d'alimentation RES. Cet interrupteur If est piloté par des moyens électronique de commande ECU utilisant une machine à état. Les moyens de commande ECU pilotent également les interrupteurs I1 à I6 de l'étage redresseur ER et les interrupteurs de l'étage onduleur OND.

Les moyens de commande ECU comportent de plus des moyens de temporisation de la fermeture de l'interrupteur If, et des moyens d'activation de charge autorisant un transfert d'énergie entre le réseau RES et la batterie Batt. Ces moyens d'activation consistent par exemple en un pilotage adéquat des interrupteurs des étages redresseur ER et onduleur OND.

Ainsi les moyens de commandes ECU sont aptes à retarder un début de charge du système de charge SYS en temporisant la fermeture de l'interrupteur If de manière à limiter le courant d'appel des composantes capacitives du système de charge SYS lors de cette fermeture.

Les moyens de commande ECU reçoivent en outre des mesures de tension des phases d'alimentation du réseau RES grâce aux moyens MMT de mesure de tension. Ces tensions mesurées entre chaque phase d'alimentation du réseau RES et le neutre du réseau RES permettent de piloter les interrupteurs de l'étage redresseur ER et de l'étage onduleur OND, mais également de déterminer un instant optimal de fermeture de l'interrupteur de puissance If.

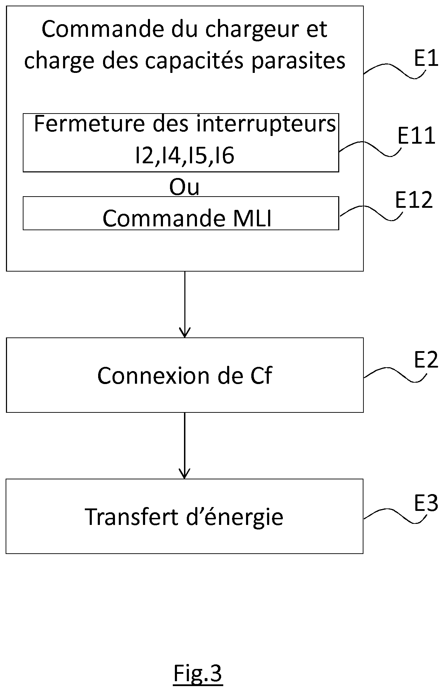

En référence à la **figure 3**, un procédé de charge de la batterie de traction Batt selon l'invention est représenté sous la forme d'un algorithme comportant des étapes E1 à E3.

Le procédé est mis en œuvre au moins en partie dans les moyens de commande ECU qui sont des moyens logiciels implémentés dans un ou plusieurs calculateurs du véhicule.

On suppose au préalable que le système de charge SYS est connecté au réseau électrique RES.

L'étape E1 est une commande du système de charge SYS, permettant de charger les capacités parasites Cp1, Cp2 et Cmot sans transfert d'énergie du réseau d'alimentation RES vers ladite batterie de traction Batt.

Pour cela, dans une variante principale de réalisation E11 de l'étape E1, les moyens de commande ECU ferment les interrupteurs bas I4, I5, I6 et l'interrupteur haut I2 de l'étage redresseur ER, les interrupteurs de l'étage onduleur OND restant ouverts, ainsi que les interrupteurs I1 et I3. Cette commande d'interrupteurs permet de charger au moins partiellement les capacités Cp1, Cp2 et Cmot tout en préparant une phase de roue libre en vue d'un transfert d'énergie entre le réseau d'alimentation RES et la batterie Batt.

Lorsque le réseau d'alimentation RES est monophasé, la phase d'alimentation du réseau RES étant par exemple ϕ1 et la phase de neutre ϕ3, la fermeture des interrupteurs I4, I5, I6 et I2 a lieu de préférence à un instant pour lequel l'amplitude de tension de la phase d'alimentation ϕ1 devient très faible par rapport à son amplitude maximale, par exemple à son passage par zéro Volts.

Lorsque le réseau d'alimentation RES est triphasé, on ferme également les interrupteurs I4, I5, I6 et I2 dans cette variante principale de réalisation E11, préférentiellement de manière séquentielle, les interrupteurs I4, I5, I6 et I2 se fermant chacun avantageusement au passage par zéro volts de la phase sur laquelle l'interrupteur correspondant est connecté.

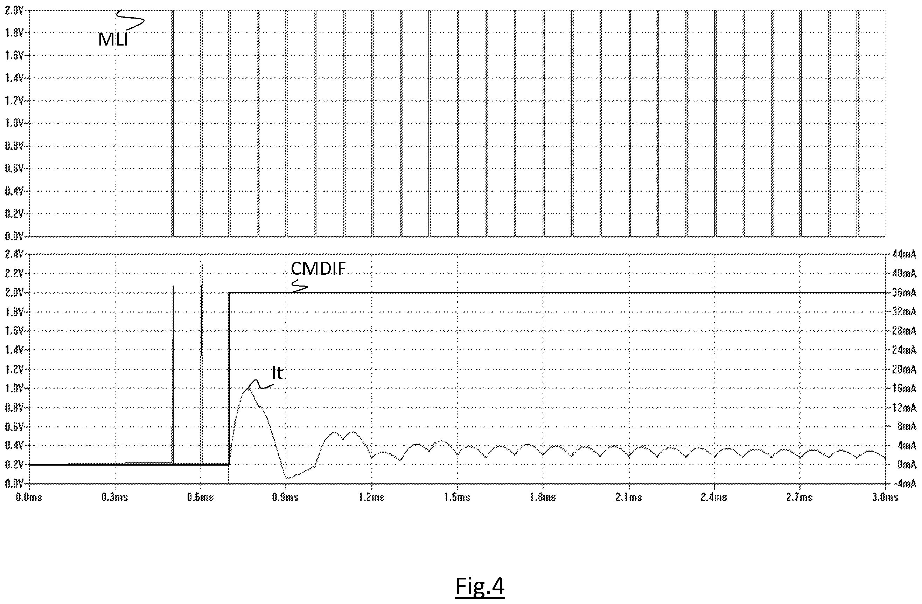

Alternativement, dans une autre variante E12 de réalisation de cette étape E1, les moyens de commande ECU pilotent alternativement en position ouverte puis fermée les interrupteurs I1, I2, I3, I4, I5 et I6 par modulation de largeur d'impulsion (MLI), les interrupteurs de l'étage élévateur de tension EE ainsi que l'interrupteur If restant en position ouverte pendant cette étape E1. Cette commande des interrupteurs I1, I2, I3, I4, I5 et I6 est représentée sur la courbe MLI de la **figure 4**, l'axe des ordonnées représentant l'amplitude en volts de la commande des interrupteurs, et l'axe des abscisses le temps en millisecondes.

L'étape suivante E2, mise en œuvre par les moyens de temporisation des moyens de commande ECU, est la connexion de la capacité de limitation de courants de fuite Cf à la phase ϕ3 par la fermeture de l'interrupteur If, à l'expiration d'un délai supérieur ou égal à un délai prédéterminé. Cette temporisation est démarrée dès la fermeture des interrupteurs I4, I5, I6 et I2 à l'étape E1, ou dès le début de la commande en modulation de largeur d'impulsion à l'étape E1. Le délai prédéterminé doit permettre de laisser passer le premier pic du courant résonant It circulant par la prise de terre. Ce délai prédéterminé est de l'ordre d'une milliseconde par exemple dans ce mode de réalisation préféré de l'invention.

Enfin l'étape E3, mise en œuvre par les moyens d'activation des moyens de commande ECU, est le transfert d'énergie entre le réseau d'alimentation RES et la batterie de traction Batt, une fois l'interrupteur If fermé par les moyens de commande ECU. Le début de ce transfert d'énergie, effectué par une commande en modulation de largeur d'impulsion des interrupteurs de l'étage redresseur ER et de l'étage élévateur de tension EE, coïncide par exemple avec la fermeture de l'interrupteur If à l'étape E2.

Lorsque le réseau d'alimentation RES est monophasé, la phase d'alimentation du réseau RES étant par exemple ϕ1 et la phase de neutre ϕ3, ce transfert débute préférentiellement à un instant pour lequel l'amplitude de tension de la phase d'alimentation ϕ1 devient très faible par rapport à son amplitude maximale, par exemple à son passage par zéro.

Lorsque le réseau d'alimentation RES est triphasé, ce transfert débute préférentiellement de manière à fermer les interrupteurs de l'étage redresseur ER séquentiellement aux passages par zéro des phases d'alimentation correspondantes.

L'invention permet de diminuer de moitié l'amplitude du courant It comme représenté sur le diagramme du bas de la **figure 4**, la courbe CMDIF correspondant à la commande de l'interrupteur If. Sur ce diagramme du bas de la **figure 4**, l'axe des ordonnées à gauche correspond à l'échelle d'amplitude du courant utilisé pour la courbe CMDIF, et l'axe des ordonnées à droite correspond à l'échelle d'amplitude du courant utilisé pour la courbe du courant It. L'axe des abscisses est le même que pour la courbe MLI. Cette courbe du courant It a été obtenue avec le système de charge SYS alimenté en monophasé, avec une résistance de terre Rterre de l'ordre de 0,010hms, une capacité parasite Cp1 de l'ordre de 80 nanofarads et une capacité parasite Cp2 de l'ordre de 40 nanofarads.

Il est à noter que bien que dans ce mode de réalisation préféré de l'invention on ferme les interrupteurs I4, I5, I6 et I2 pour charger les capacités parasites du système de charge SYS, l'invention est réalisable en fermant seulement une partie de ces interrupteurs, par exemple les interrupteurs I4, puis I6, puis I5 puis I2. En effet même si toutes les capacités parasites ne sont pas chargées ou sont partiellement chargées, l'invention fonctionne si le courant d'appel généré par l'ensemble des capacités parasites du système de charge à la fermeture de l'interrupteur If est suffisamment limité.

## Revendications

1. Système (SYS) de charge pour batterie (Batt) de traction d'un véhicule à traction au moins partiellement électrique, comportant un étage de filtrage (EF) d'entrée destiné à être connecté à un réseau d'alimentation (RES), ledit étage de filtrage (EF) comportant une capacité (Cf) de limitation de courants de fuite apte à être connectée, par un interrupteur (If) de l'étage de filtrage (EF), entre d'une part au moins une connexion de phase d'alimentation ou une connexion de neutre (ϕ3) dudit système (SYS) de charge, et d'autre part une masse dudit système (SYS) de charge,
ledit système (SYS) de charge étant **caractérisé en ce qu'**il comporte en outre:
- des moyens de commande (ECU), aptes à charger des capacités parasites (Cp1,Cp2,Cmot) dudit système (SYS) de charge, sans transfert d'énergie dudit réseau d'alimentation (RES) vers ladite batterie (Batt) de traction, alors que ledit réseau d'alimentation (RES) est connecté audit système (SYS) de charge,
- des moyens de temporisation, activés par lesdits moyens de commande (ECU), et aptes à fermer ledit interrupteur (If) de l'étage de filtrage (EF) à l'expiration d'un délai de temporisation supérieur ou égal à un délai prédéterminé ,
- et des moyens d'activation de charge aptes à transférer de l'énergie entre ledit réseau d'alimentation (RES) et ladite batterie (Batt) de traction, ledit interrupteur (If) de l'étage de filtrage (EF) étant fermé.

2. Système (SYS) de charge pour batterie (Batt) de traction selon la revendication 1, **caractérisé en ce que** lesdits moyens d'activation sont aptes à temporiser un transfert d'énergie entre ledit réseau d'alimentation (RES) et ladite batterie (Batt) de traction jusqu'à un instant pour lequel l'amplitude d'une tension d'une phase d'alimentation (ϕ1) dudit réseau d'alimentation devient très faible par rapport à son amplitude maximale.

3. Système (SYS) de charge pour batterie (Batt) de traction selon la revendication 2, **caractérisé en ce que** ledit délai de temporisation expire à un instant pour lequel l'amplitude d'une tension d'une phase d'alimentation dudit réseau d'alimentation (ϕ1) devient très faible par rapport à son amplitude maximale, lesdits moyens d'activation débutant le transfert d'énergie entre ledit réseau d'alimentation (RES) et ladite batterie (Batt) dès la fermeture dudit interrupteur (If) de l'étage de filtrage (EF).

4. Système (SYS) de charge pour batterie (Batt) de traction selon l'une quelconque des revendications 1 à 3, **caractérisé en ce qu'**une capacité d'amortissement (Cfa) et une résistance d'amortissement (Rfa) sont également connectés, par ledit interrupteur (If) de l'étage de filtrage (EF), entre d'une part ladite au moins une connexion de phase d'alimentation ou ladite connexion de neutre (ϕ3) dudit système (SYS) de charge, et d'autre part ladite masse dudit système (SYS) de charge.

5. Système (SYS) de charge pour batterie (Batt) de traction selon l'une quelconque des revendications 1 à 4, **caractérisé en ce que**, ledit système (SYS) de charge comportant un étage redresseur (ER) apte à être connecté au réseau d'alimentation (RES) par l'intermédiaire de l'étage de filtrage (EF) d'entrée, et un étage élévateur de tension (EE) connecté entre ledit étage redresseur (ER) et ladite batterie (Batt) de traction, lesdits étages redresseur (ER) et élévateur de tension (EE) comportant des interrupteurs , lesdits moyens de commande (ECU) sont aptes à faire commuter les interrupteurs (I1, I2, I3, I4, I5, I6) de l'étage redresseur (ER) par une commande en modulation de largeur d'impulsion (MLI), les interrupteurs de l'étage élévateur de tension (EE) restant ouverts, pendant ledit délai de temporisation.

6. Système (SYS) de charge pour batterie (Batt) de traction selon l'une quelconque des revendications 1 à 4, **caractérisé en ce que**, ledit système (SYS) de charge comportant un étage redresseur (ER) apte à être connecté au réseau d'alimentation (RES) par l'intermédiaire de l'étage de filtrage (EF) d'entrée, et un étage élévateur de tension (EE) connecté entre ledit étage redresseur (ER) et ladite batterie de traction (Batt), lesdits étages redresseur (ER) et élévateur de tension (EE) comportant des interrupteurs initialement ouverts, et ledit réseau d'alimentation (RES) étant monophasé, lesdits moyens de commande (ECU) sont aptes à commander la fermeture des interrupteurs bas (I4, I5, I6) dudit étage redresseur (ER) à un instant pour lequel l'amplitude de tension de la phase d'alimentation (ϕ1) dudit réseau monophasé devient très faible par rapport à son amplitude maximale, avant l'activation desdits moyens de temporisation.

7. Système (SYS) de charge pour batterie (Batt) de traction selon la revendication 6, **caractérisé en ce que** lesdits moyens de commande (ECU) sont aptes à accompagner ladite fermeture des interrupteurs bas (I4, I5, I6) dudit étage redresseur de la fermeture d'un interrupteur haut (I2) dudit étage redresseur (ER) assurant un fonctionnement dudit système (SYS) de charge en phase de roue libre avant l'activation d'un transfert d'énergie entre ledit réseau d'alimentation (RES) et ladite batterie (Batt) de traction.

8. Procédé de charge d'une batterie (Batt) de traction d'un véhicule à traction au moins partiellement électrique, un système (SYS) de charge dudit véhicule ayant été préalablement connecté à un réseau d'alimentation (RES) électrique comportant au moins une phase d'alimentation et un neutre (ϕ1, ϕ2, ϕ3),
ledit procédé étant **caractérisé en ce qu'**il comporte :
- une étape de commande (E1) dudit système (SYS) de charge, apte à charger des capacités parasites (Cp1, Cp2, Cmot) dudit système (SYS) de charge sans transfert d'énergie dudit réseau d'alimentation (RES) vers ladite batterie (Batt) de traction,
- une étape de connexion (E2) d'une capacité (Cf) de limitation de courants de fuite entre d'une part une connexion à ladite au moins une phase d'alimentation ou audit neutre (ϕ3) et d'autre part une masse dudit système (SYS) de charge, ladite étape de connexion (E2) ayant lieu à l'expiration d'un délai supérieur ou égal à un délai prédéterminé,
- et une étape de transfert d'énergie (E3) entre ledit réseau d'alimentation (RES) et ladite batterie (Batt) de traction, après l'étape de connexion (E2) de ladite capacité (Cf) de limitation de courants de fuite.

9. Procédé de charge d'une batterie (Batt) de traction selon la revendication 8, **caractérisé en ce que** ladite étape de transfert d'énergie (E3) débute à un instant pour lequel l'amplitude de tension de ladite au moins une phase d'alimentation (ϕ1) devient très faible par rapport à son amplitude maximale.

10. Procédé de charge d'une batterie (Batt) de traction selon la revendication 8 ou 9, **caractérisé en ce que** ladite étape de transfert d'énergie (E3) suit immédiatement l'étape de connexion (E2) de la capacité (Cf) de limitation de courants de fuite.

11. Procédé de charge d'une batterie (Batt) de traction selon l'une quelconque des revendications 8 à 10, **caractérisé en ce que** lorsque ledit système (SYS) de charge comporte un étage redresseur (ER) connecté au réseau d'alimentation (RES), et un étage élévateur de tension (EE) connecté entre ledit étage redresseur (ER) et ladite batterie (Batt) de traction, lesdits étages redresseur (ER) et élévateur de tension (EE) comportant des interrupteurs, l'étape de commande (E1) comporte une étape (E12) de fermeture des interrupteurs dudit étage redresseur (ER), utilisant une commande en modulation de largeur d'impulsion (MLI), les interrupteurs dudit étage élévateur de tension (EE) restant en position ouverte pendant cette étape (E1) de commande.

12. Procédé de charge d'une batterie (Batt) de traction selon l'une quelconque des revendications 8 à 10, **caractérisé en ce que**, lorsque ledit système (SYS) de charge comporte un étage redresseur (ER) connecté au réseau d'alimentation (RES), ledit réseau d'alimentation (RES) étant monophasé, et un étage élévateur de tension (EE) connecté entre ledit étage redresseur (ER) et ladite batterie (Batt) de traction, lesdits étages redresseur (ER) et élévateur de tension (EE) comportant des interrupteurs, l'étape de commande (E1) comporte une étape (E11) de fermeture des interrupteurs bas (I4, I5, I6) dudit étage redresseur (ER) à un instant pour lequel l'amplitude de tension de ladite au moins une phase d'alimentation (ϕ1) devient très faible par rapport à son amplitude maximale, les interrupteurs dudit étage élévateur de tension (EE) restant en position ouverte pendant cette étape de commande (E1).

13. Procédé de charge selon la revendication 12, **caractérisé en ce que** la fermeture des interrupteurs bas (I4, I5, I6) de l'étage redresseur (ER) s'accompagne de la fermeture d'un interrupteur haut (I2) dudit étage redresseur (ER), assurant un fonctionnement dudit système (SYS) de charge en phase de roue libre avant l'étape de transfert d'énergie (E3) entre ledit réseau d'alimentation (RES) et ladite batterie de traction (Batt).

## Patentansprüche

1. Ladesystem (SYS) für eine Antriebsbatterie (Batt) eines Fahrzeugs mit zumindest teilweisem elektrischem Antrieb, aufweisend eine Eingangs-Filterstufe (EF) zur Verbindung mit einem Versorgungsnetz (RES), die Filterstufe (EF) aufweisend eine Kapazität (Cf) zur Begrenzung von Leckströmen, die geeignet ist, durch einen Schalter (If) der Filterstufe (EF) zwischen einerseits mindestens einem Versorgungsphasenanschluss oder einem Neutralleiteranschluss (ϕ3) des Ladesystems (SYS) und andererseits einer Masse des Ladesystems (SYS) angeschlossen zu sein,
wobei das System (SYS) **dadurch gekennzeichnet ist, dass** es ferner Folgendes aufweist:
- Steuermittel (ECU), die geeignet sind, parasitäre Kapazitäten (Cp1, Cp2, Cmot) des Ladesystems (SYS) ohne Energieübertragung von dem Versorgungsnetz (RES) zu der Antriebsbatterie (Batt) zu laden, während das Versorgungsnetz (RES) an das Ladesystem (SYS) angeschlossen ist,
- Verzögerungsmittel, die durch die Steuermittel (ECU) aktiviert werden und geeignet sind, den Schalter (If) der Filterstufe (EF) bei Ablauf einer Verzögerungszeitspanne, die größer als oder gleich einer vorbestimmten Zeitspanne ist, zu schließen,
- und Ladeaktivierungsmittel, die geeignet sind, Energie zwischen dem Versorgungsnetz (RES) und der Antriebsbatterie (Batt) zu übertragen, wobei der Schalter (If) der Filterstufe (EF) geschlossen ist.

2. Ladesystem (SYS) für eine Antriebsbatterie (Batt) nach Anspruch 1, **dadurch gekennzeichnet, dass** die Aktivierungsmittel geeignet sind, eine Energieübertragung zwischen dem Versorgungsnetz (RES) und der Antriebsbatterie (Batt) bis zu einem Zeitpunkt zu verzögern, für welchen die Amplitude einer Spannung einer Versorgungsphase (ϕ1) des Versorgungsnetzes im Verhältnis zu deren Maximalamplitude sehr gering wird.

3. Ladesystem (SYS) für eine Antriebsbatterie (Batt) nach Anspruch 2, **dadurch gekennzeichnet, dass** die Verzögerungszeitspanne zu einem Zeitpunkt abläuft, für welchen die Amplitude einer Spannung einer Versorgungsphase des Versorgungsnetzes (ϕ1) im Verhältnis zu deren Maximalamplitude sehr gering wird, wobei die Aktivierungsmittel ab dem Schließen des Schalters (If) der Filterstufe (EF) mit der Energieübertragung zwischen dem Versorgungsnetz (RES) und der Batterie (Batt) beginnen.

4. Ladesystem (SYS) für eine Antriebsbatterie (Batt) nach einem der Ansprüche 1 bis 3, **dadurch gekennzeichnet, dass** eine Dämpfungskapazität (Cfa) und ein Dämpfungswiderstand (Rfa) ebenfalls durch den Schalter (If) der Filterstufe (EF) zwischen einerseits dem mindestens einen Versorgungsphasenanschluss oder dem Neutralleiteranschluss (ϕ3) des Ladesystems (SYS) und andererseits der Masse des Ladesystems (SYS) angeschlossen sind.

5. Ladesystem (SYS) für eine Antriebsbatterie (Batt) nach einem der Ansprüche 1 bis 4, **dadurch gekennzeichnet, dass**, das Ladesystem (SYS) aufweisend eine Gleichrichterstufe (ER), die geeignet ist, mittels der Eingangs-Filterstufe (EF) mit dem Versorgungsnetz (RES) verbunden zu sein, und eine Spannungsanhebungsstufe (EE), die zwischen der Gleichrichterstufe (ER) und der Antriebsbatterie (Batt) angeschlossen ist, wobei die Gleichrichter- (ER) und Spannungsanhebungsstufe (EE) Schalter aufweisen, die Steuermittel (ECU) geeignet sind, die Schalter (I1, I2, I3, I4, I5, I6) der Gleichrichterstufe (ER) durch eine Pulsweitenmodulations-, PWM-, Steuerung umzuschalten, wobei die Schalter der Spannungsanhebungsstufe (EE) während der Verzögerungszeitspanne geöffnet bleiben.

6. Ladesystem (SYS) für eine Antriebsbatterie (Batt) nach einem der Ansprüche 1 bis 4, **dadurch gekennzeichnet, dass**, das Ladesystem (SYS) aufweisend eine Gleichrichterstufe (ER), die geeignet ist, mittels der Eingangs-Filterstufe (EF) mit dem Versorgungsnetz (RES) verbunden zu sein, und eine Spannungsanhebungsstufe (EE), die zwischen der Gleichrichterstufe (ER) und der Antriebsbatterie (Batt) angeschlossen ist, wobei die Gleichrichter- (ER) und Spannungsanhebungsstufe (EE) Schalter aufweisen, die anfangs geöffnet sind, und das Versorgungsnetz (RES) einphasig ist, die Steuermittel (ECU) geeignet sind, das Schließen der unteren Schalter (I4, I5, I6) der Gleichrichterstufe (ER) zu einem Zeitpunkt zu steuern, für welchen die Spannungsamplitude der Versorgungsphase (ϕ1) des einphasigen Netzes im Verhältnis zu deren Maximalamplitude sehr gering wird, vor der Aktivierung der Verzögerungsmittel.

7. Ladesystem (SYS) für eine Antriebsbatterie (Batt) nach Anspruch 6, **dadurch gekennzeichnet, dass** die Steuermittel (ECU) geeignet sind, das Schließen der unteren Schalter (I4, I5, I6) der Gleichrichterstufe von dem Schließen eines oberen Schalters (I2) der Gleichrichterstufe (ER) zu begleiten, wobei ein Betrieb des Ladesystems (SYS) in der Freilaufphase vor der Aktivierung einer Energieübertragung zwischen dem Versorgungsnetz (RES) und der Antriebsbatterie (Batt) sichergestellt wird.

8. Verfahren zum Laden einer Antriebsbatterie (Batt) eines Fahrzeugs mit zumindest teilweisem elektrischem Antrieb, wobei zuvor ein Ladesystem (SYS) des Fahrzeugs an ein Stromversorgungsnetz (RES) angeschlossen wurde, das mindestens eine Versorgungsphase und einen Neutralleiter (ϕ1, ϕ2, ϕ3) aufweist,
wobei das Verfahren **dadurch gekennzeichnet ist, dass** es Folgendes aufweist:
- einen Schritt des Steuerns (E1) des Ladesystems (SYS), das geeignet ist, parasitäre Kapazitäten (Cp1, Cp2, Cmot) des Ladesystems (SYS) ohne Energieübertragung von dem Versorgungsnetz (RES) zu der Antriebsbatterie (Batt) zu laden,
- einen Schritt des Anschließens (E2) einer Kapazität (Cf) zur Begrenzung von Leckströmen zwischen einerseits einen Anschluss an die mindestens eine Versorgungsphase oder an den Neutralleiter (ϕ3) und andererseits eine Masse des Ladesystems (SYS), wobei der Schritt des Anschließens (E2) bei Ablauf einer Zeitspanne erfolgt, die größer als oder gleich einer vorbestimmten Zeitspanne ist,
- und einen Schritt der Energieübertragung (E3) zwischen dem Versorgungsnetz (RES) und der Antriebsbatterie (Batt) nach dem Schritt des Anschließens (E2) der Kapazität (Cf) zur Begrenzung von Leckströmen.

9. Verfahren zum Laden einer Antriebsbatterie (Batt) nach Anspruch 8, **dadurch gekennzeichnet, dass** der Schritt der Energieübertragung (E3) zu einem Zeitpunkt beginnt, für welchen die Spannungsamplitude der mindestens einen Versorgungsphase (ϕ1) im Verhältnis zu deren Maximalamplitude sehr gering wird.

10. Verfahren zum Laden einer Antriebsbatterie (Batt) nach Anspruch 8 oder 9, **dadurch gekennzeichnet, dass** der Schritt der Energieübertragung (E3) unmittelbar auf den Schritt des Anschließens (E2) der Kapazität (Cf) zur Begrenzung von Leckströmen folgt.

11. Verfahren zum Laden einer Antriebsbatterie (Batt) nach einem der Ansprüche 8 bis 10, **dadurch gekennzeichnet, dass**, wenn das Ladesystem (SYS) eine Gleichrichterstufe (ER) aufweist, die an das Versorgungsnetz (RES) angeschlossen ist, und eine Spannungsanhebungsstufe (EE), die zwischen der Gleichrichterstufe (ER) und der Antriebsbatterie (Batt) angeschlossen ist, wobei die Gleichrichter- (ER) und Spannungsanhebungsstufe (EE) Schalter aufweisen, der Schritt des Steuerns (E1) einen Schritt (E12) des Schließens der Schalter der Gleichrichterstufe (ER) unter Verwendung einer Pulsweitenmodulations-, PWM-, Steuerung aufweist, wobei die Schalter der Spannungsanhebungsstufe (EE) während dieses Schritts (E1) des Steuerns in der geöffneten Position bleiben.

12. Verfahren zum Laden einer Antriebsbatterie (Batt) nach einem der Ansprüche 8 bis 10, **dadurch gekennzeichnet, dass**, wenn das Ladesystem (SYS) eine Gleichrichterstufe (ER) aufweist, die an das Versorgungsnetz (RES) angeschlossen ist, wobei das Versorgungsnetz (RES) einphasig ist, und eine Spannungsanhebungsstufe (EE), die zwischen der Gleichrichterstufe (ER) und der Antriebsbatterie (Batt) angeschlossen ist, wobei die Gleichrichter- (ER) und Spannungsanhebungsstufe (EE) Schalter aufweisen, der Schritt des Steuerns (E1) einen Schritt (E11) des Schließens der unteren Schalter (I4, I5, I6) der Gleichrichterstufe (ER) zu einem Zeitpunkt, für welchen die Spannungsamplitude der mindestens einen Versorgungsphase (ϕ1) im Verhältnis zu deren Maximalamplitude sehr gering wird, aufweist, wobei die Schalter der Spannungsanhebungsstufe (EE) während dieses Schritts (E1) des Steuerns in der geöffneten Position bleiben.

13. Ladeverfahren nach Anspruch 12, **dadurch gekennzeichnet, dass** das Schließen der unteren Schalter (I4, I5, I6) der Gleichrichterstufe (ER) vom Schließen eines oberen Schalters (I2) der Gleichrichterstufe (ER) begleitet wird, wobei ein Betrieb des Ladesystems (SYS) in der Freilaufphase vor dem Schritt der Energieübertragung (E3) zwischen dem Versorgungsnetz (RES) und der Antriebsbatterie (Batt) sichergestellt wird.

## Claims

1. System (SYS) for charging a traction battery (Batt) of a traction vehicle, at least partially electric, comprising an input filtering step (EF) designed to be connected to a power supply network (RES), said filtering step (EF) comprising a capacitance (Cf) for limiting leakage currents capable of being connected, through a switch (If) of the filtering step (EF), between on the one hand at least one power supply phase connection or a neutral (ϕ3) connection of said charging system (SYS), and on the other hand a ground of said charging system (SYS),
said charging system (SYS) being **characterized in that** it further comprises:
- control means (ECU) capable of charging parasitic capacitances (Cp1,Cp2,Cmot) of said charging system (SYS) without transferring energy from said power supply network (RES) to said traction battery (Batt) while said power supply network (RES) is connected to said charging system (SYS),
- time delay means activated by said control means (ECU), and capable of closing said switch (If) of the filtering step (EF) when a delay time frame higher than or equal to a predetermined time frame expires,
- and charging activation means capable of transferring energy between said power supply network (RES) and said traction battery (Batt), said switch (If) of the filtering step (EF) being closed.

2. System (SYS) for charging a traction battery (Batt) according to Claim 1, **characterized in that** said activation means are capable of delaying a transfer of energy between said power supply network (RES) and said traction battery (Batt) until an instant at which the amplitude of a voltage of a power supply phase (ϕ1) of said power supply network becomes very low compared with its maximum amplitude.

3. System (SYS) for charging a traction battery (Batt) according to Claim 2, **characterized in that** said delay time frame expires at an instant at which the amplitude of a voltage of a power supply phase of said power supply network (ϕ1) becomes very low compared with its maximum amplitude, said activation means starting the transfer of energy between said power supply network (RES) and said battery (Batt) from the closing of said switch (If) of the filtering step (EF).

4. System (SYS) for charging a traction battery (Batt) according to any one of Claims 1 to 3, **characterized in that** a damping capacitance (Cfa) and a damping resistance (Rfa) are also connected, through said switch (If) of the filtering step (EF), between on the one hand said at least one power supply phase connection or said neutral (ϕ3) connection of said charging system (SYS), and on the other hand said ground of said charging system (SYS).

5. System (SYS) for charging a traction battery (Batt) according to any one of Claims 1 to 4, **characterized in that**, said charging system (SYS) comprising a rectifying step (ER) capable of being connected to the power supply network (RES) via the input filtering step (EF), and a voltage step-up step (EE) connected between said rectifying step (ER) and said traction battery (Batt), said rectifying (ER) and voltage step-up (EE) steps comprising switches, said control means (ECU) are capable of making the switches (I1, I2, I3, I4, I5, I6) of the rectifying step (ER) switch over through a pulse width modulation (PWM) control, the switches of the voltage step-up step (EE) remaining open, during said delay time frame.

6. System (SYS) for charging a traction battery (Batt) according to any one of Claims 1 to 4, **characterized in that**, said charging system (SYS) comprising a rectifying step (ER) capable of being connected to the power supply network (RES) via the input filtering step (EF), and a voltage step-up step (EE) connected between said rectifying step (ER) and said traction battery (Batt), said rectifying (ER) and voltage step-up (EE) steps comprising switches which are initially open, and said power supply network (RES) being single-phase, said control means (ECU) are capable of controlling the closing of the low switches (14, 15, 16) of said rectifying step (ER) at an instant at which the voltage amplitude of the power supply phase (ϕ1) of said single-phase network becomes very low compared with its maximum amplitude, before the activation of said time delay means.

7. System (SYS) for charging a traction battery (Batt) according to Claim 6, **characterized in that** said control means (ECU) are capable of accompanying said closing of the low switches (14, 15, 16) of said rectifying step with the closing of a high switch (12) of said rectifying step (ER), ensuring functioning of said charging system (SYS) in free wheel phase before the activation of an energy transfer between said power supply network (RES) and said traction battery (Batt).

8. Method for charging a traction battery (Batt) of a traction vehicle, at least partially electric, a charging system (SYS) of said vehicle having been connected beforehand to an electrical power supply network (RES) comprising at least one power supply phase and one neutral (ϕ1, ϕ2, ϕ3),
said method being **characterized in that** it comprises:
- a step (E1) of controlling said charging system (SYS), capable of charging parasitic capacitances (Cp1, Cp2, Cmot) of said charging system (SYS) without transferring energy from said power supply network (RES) to said traction battery (Batt),
- a step (E2) of connecting a capacitance (Cf) for limiting leakage currents between on the one hand a connection to said at least one power supply phase or to said neutral (ϕ3) and on the other hand a ground of said charging system (SYS), said connecting step (E2) taking place when a time frame higher than or equal to a predetermined time frame expires,
- and a step (E3) of transferring energy between said power supply network (RES) and said traction battery (Batt), following the step (E2) of connecting said capacitance (Cf) for limiting leakage currents.

9. Method for charging a traction battery (Batt) according to Claim 8, **characterized in that** said step (E3) of transferring energy starts at an instant at which the voltage amplitude of said at least one power supply phase (ϕ1) becomes very low compared with its maximum amplitude.

10. Method for charging a traction battery (Batt) according to Claim 8 or 9, **characterized in that** said step (E3) of transferring energy immediately follows the step (E2) of connecting the capacitance (Cf) for limiting leakage currents.

11. Method for charging a traction battery (Batt) according to any one of Claims 8 to 10, **characterized in that** when said charging system (SYS) comprises a rectifying step (ER) connected to the power supply network (RES), and a voltage step-up step (EE) connected between said rectifying step (ER) and said traction battery (Batt), said rectifying (ER) and voltage step-up (EE) steps comprising switches, the control step (E1) comprises a step (E12) of closing the switches of said rectifying step (ER), using a pulse width modulation (PWM) control, the switches of said voltage step-up step (EE) remaining in the open position during this control step (E1).

12. Method for charging a traction battery (Batt) according to any one of Claims 8 to 10, **characterized in that**, when said charging system (SYS) comprises a rectifying step (ER) connected to the power supply network (RES), said power supply network (RES) being singe-phase, and a voltage step-up step (EE) connected between said rectifying step (ER) and said traction battery (Batt), said rectifying (ER) and voltage step-up (EE) steps comprising switches, the control step (E1) comprises a step (E11) of closing the low switches (I4, I5, I6) of said rectifying step (ER) at an instant at which the voltage amplitude of said at least one power supply phase (ϕ1) becomes very low compared with its maximum amplitude, the switches of said voltage step-up step (EE) remaining in the open position during this control step (E1).

13. Charging method according to Claim 12, **characterized in that** the closing of the low switches (I4, I5, I6) of the rectifying step (ER) is accompanied by the closing of a high switch (12) of said rectifying step (ER), ensuring functioning of said charging system (SYS) in free wheel phase before the step (E3) of transferring energy between said power supply network (RES) and said traction battery (Batt).
